# EUROPEAN PATENT SPECIFICATION

(11) **EP 2 325 027 B1**
(45) Date of publication and mention of the grant of the patent: **14.11.2012**
(21) Application number: 10191939.7
(22) Date of filing: 19.11.2010
(51) Int. Cl.: B60C 1/00, C08C 19/22, C08C 19/25, C08K 3/36, C08L 9/00, C08L 9/06, C08L 15/00

(54) **Rubber composition, method of manufacturing a rubber composition and pneumatic tire with such a rubber composition**
Gummizusammensetzung, Verfahren zur Herstellung einer Gummizusammensetzung und Luftreifen mit der Gummizusammensetzung
Composition de caoutchouc, procédé de fabrication correspondant et pneu utilisant cette composition de caoutchouc

(30) Priority: 20.11.2009 US 622800
(43) Date of publication of application: 25.05.2011
(73) Proprietor: The Goodyear Tire & Rubber Company, Akron, OH 44316-0001 (US)
(72) Inventor: Sandstrom, Paul Harry, Cuyahoga Falls, OH 44223 (US); Gulas, Brad Stephen, Cleveland, OH 44113 (US); Frantz, David Mark, Norton, OH 44203 (US); Cronin, Steven Wayne, Akron, OH 44313 (US); Wong, Tang Hong, Hudson, OH 44236 (US); Rachita, Michael Joseph, North Canton, OH 44720 (US)
(74) Representative: Kutsch, Bernd

(56) References cited:
- EP-A1- 1 484 362
- EP-A1- 1 714 984
- EP-A1- 2 196 326
- EP-A2- 1 792 892
- EP-A2- 2 177 562
- US-A1- 2004 063 884
- US-A1- 2004 116 635

## Description

### Background of the Invention

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubber compositions utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads.

EP-A- 1 714 984 describes a rubber composition comprising a styrene-butadiene rubber and a polymer of 1,3 butadiene together with silica. A similar rubber composition is also known from EP-A- 2 196 326 and EP-A- 2 177 562.

Further functionalized rubbery polymers are described in US-A- 2004/063884, US-A- 2004/0116635, EP-A- 1 792 892 and EP-A- 1 484 362.

### Summary of the Invention

The invention relates to a rubber composition in accordance with claim 1, to a method in accordance with claim 13 and to a pneumatic tire in accordance with claim 14.

Dependent claims refer to preferred embodiments of the invention.

### Description of the Invention

In a preferred embodiment of the present invention, there is disclosed to a pneumatic tire having a component comprising a rubber composition comprising, based on 100 parts by weight of elastomer (phr),
(A) from 60 to 90 phr of a polymer comprising:
   (1) a terminating group provided from a terminating compound

      XₙSi(OR)ₘR'₄₋ₘ₋ₙ

      wherein X is a chlorine atom, a bromine atom or an iodine atom, R is an alkyl group with from 1 carbon to 7 carbons, R' is a alkyl group with from 1 carbon to 20 carbons, an aryl group, a vinyl group or a halogenated alkyl group, m is an integer from 1 to 4, n is an integer from 0 to 2, and a sum of n and m is from 1 to 4;
   (2) repeat units comprising:
      (a) a repeat unit provided from a conjugated diolefin monomer, and
      (b) a repeat unit provided from an amine monomer;
(B) from 40 to 10 phr of polybutadiene having a microstructure comprising 96 to 99 percent cis 1,4-isomeric units, 0.1 to 1 percent trans 1,4-isomeric units and from 1 to 3 percent vinyl 1,2-isomeric units; preferably a number average molecular weight (Mn) in a range of from 75,000 to 150,000 and preferably a heterogeneity index (Mw/Mn) in a range of from 3/1 to 5/1; and
(C) from 50 to 150 phr of silica

The rubber composition preferably includes a polymer as disclosed in US-A- 2010/0152364. The polymer comprises (1) a terminating group provided from a terminating compound

XₙSi(OR)ₘR'_{4-m-n\}

wherein X is a chlorine atom, a bromine atom or an iodine atom, R is an alkyl group with from 1 carbon to 7 carbons, R' is a alkyl group with from 1 carbon to 20 carbons, an aryl group, a vinyl group or a halogenated alkyl group, m is an integer from 1 to 4, n is an integer from 0 to 2, and a sum of n and m is from 1 to 4; and (2) repeat units comprising: (a) a repeat unit provided from a conjugated diolefin monomer, and (b) a repeat unit provided from an amine monomer.

"Repeat units" and "monomers" are terms used to describe the makeup of polymers. A repeat unit differs from a monomer in that the repeat unit is part of the polymer whereas the monomer, which is not part of the polymer, can become a repeat unit upon being incorporated into the polymer. In some instances, a double bond of the monomer is consumed by a polymerization reaction to provide the corresponding repeat unit.

The polymers can comprise repeat units provided from at least one amine monomer. In other embodiments, a polymer can be made from the copolymerization of at least one amine monomer and at least one monomer that is used to make synthetic rubber, such as a conjugated diolefin monomer. These polymers can be terminated with at least one terminating group, including, for example, those having a hydrolyzable group.

The terminating compounds that can provide the terminating groups on the polymer, can include any number of terminating compounds, including, but not limited to, those selected from the terminating compounds of formula I

XₙSi(OR)ₘR'₄₋ₘ₋ₙ (I).

X can be a halogen atom selected from a chlorine atom, a bromine atom and an iodine atom. R can be an alkyl group with from 1 to 7 carbons (e.g., 1, 2, 3, 4, 5, 6, or 7 carbons). R' is a alkyl group with from 1 to 20 carbons, an aryl group, a vinyl group or a halogenated alkyl group, m is an integer of 1, 2, 3, or 4, n is an integer of 0, 1, or 2, and the sum of n and m is 1, 2, 3, or 4. In some embodiments, one or more -OR group(s) are hydrolyzable, by for example steam stripping procedures such as those disclosed in US-B- 5,066,721. An example of a terminating compound is TEOS (i.e., Si(OCH₂CH₃)₄).

The terminating compound can be synthesized according to a number of techniques, including, for example, those disclosed in US-B- 5,066,721.

In some preferred embodiments, the amine monomer is an amine styrene monomer. The amine styrene monomer is a styrene monomer substituted with at least one amine-comprising moiety and which can also be optionally substituted with one or more non-amine moieties. Embodiments of the amine styrene monomer include but are not limited those described in (a)-(g) below.
(a) 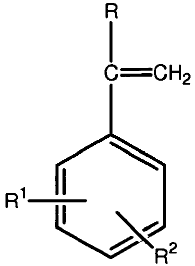 wherein R can be an alkyl group with from 1 carbon atom to 10 carbon atoms or a hydrogen atom. In some embodiments, R is a hydrogen or a methyl group. R¹ and R² can be the same or different and can be hydrogen atoms or an amine functional group. In some embodiments, R¹ and R² are not both hydrogen atoms. In some embodiments, at least one of R¹ and R² can be a moiety selected from the formula 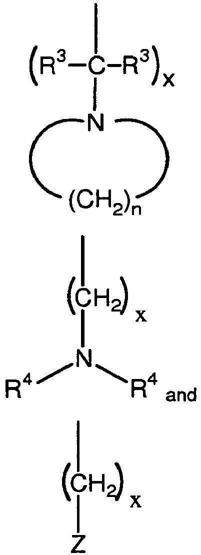 wherein the R³ groups within a repeat unit and in different repeat units can be the same or different and are hydrogen atoms or alkyl groups with from 1 carbon atom to 4 carbon atoms. In some embodiments, n can be from 1 to 10 and x can be from 1 to 10.
   R⁴ can be the same or different and can be selected from the group consisting of alkyl groups containing from 1 to 10 carbon atoms, aryl groups, allyl groups, and alklyoxy groups having the structural formula -(CH₂)_{y}-O-(CH₂)_{z}-CH₃, wherein y is an integer from 1 to 10, wherein z is an integer from 1 to 10. In some embodiment, R⁴ can be alkyl groups with from 1 to 4 carbon atoms, aryl groups with from 6 to 18 carbon atoms, or allyl groups with from 3 to 18 carbon atoms;
   Z can be a nitrogen-containing heterocyclic compound. In some embodiments, Z can be one of the following moieties: 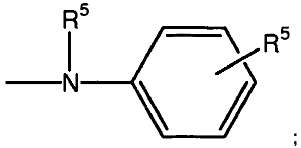 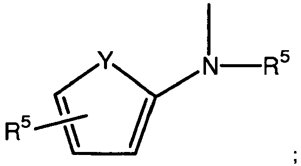 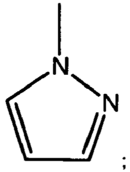 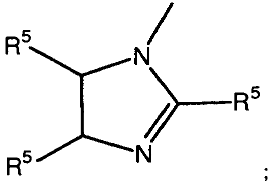 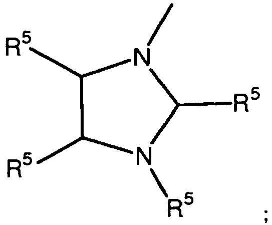 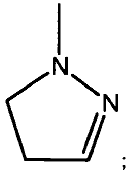 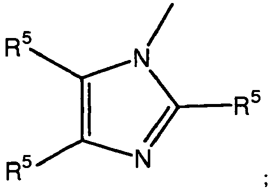 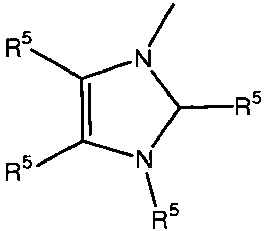 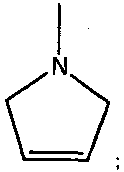 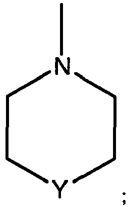 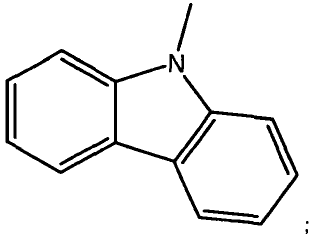 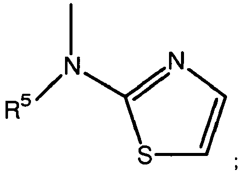 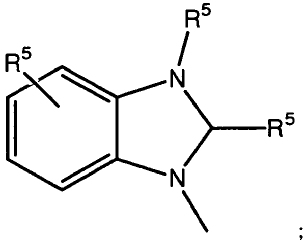 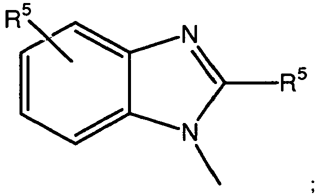 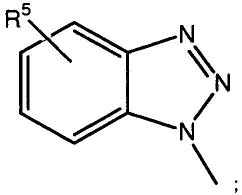 and 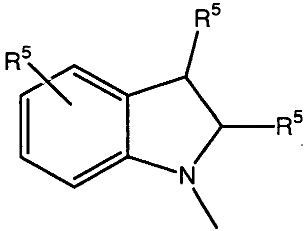 R⁵ groups can be the same or different and can be selected from the group consisting of alkyl groups with from 1 carbon atom to 10 carbon atoms, aryl groups, allyl groups, and alkoxy groups. Y can be oxygen, sulfur, or a methylene group.
(b) 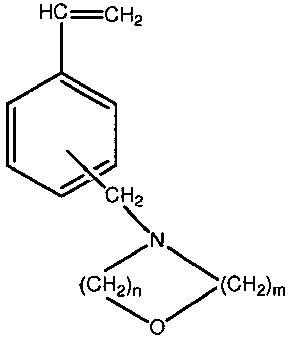 n can be an integer from 1 to 10 and m can be an integer from 1 to 10. In some embodiments, the sum of n and m is at least 4.
(c) 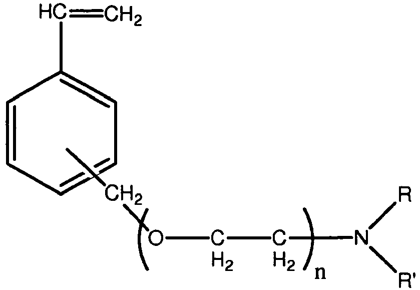 n can be an integer from 1 to 10, and R and R' can be the same or different and can be alkyl groups with from 1 carbon atom to 10 carbon atoms.
(d) 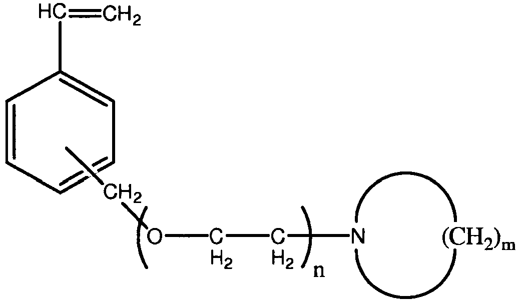 n can be an integer from 1 to 10 and m can be an integer from 4 to 10.
(e) 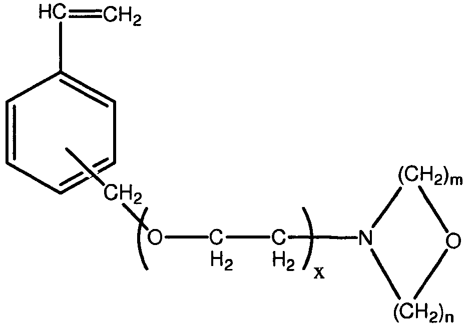 x can be an integer from 1 to 10, n can be an integer from 1 to 10 and m can be an integer from 1 to 10. In some embodiments, the sum of n and m is at least 4.
(f) 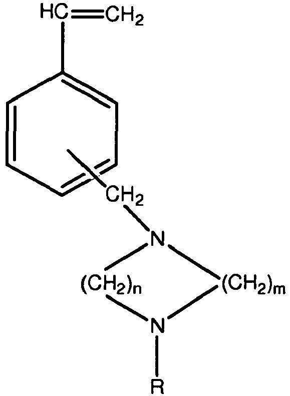 R can be a hydrogen atom or an alkyl group with from 1 carbon atom to 10 carbon atoms, n can be an integer from 1 to 10, and m can be an integer from 1 to 10. In some embodiments, the sum of n and m is at least 4.
(g) 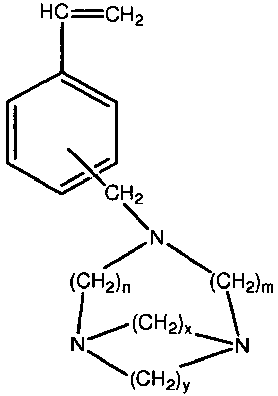 n can be an integer from 1 to 10, m can be an integer from 1 to 10, x can be an integer from 1 to 10, and y can be an integer from 1 to 10;

In some embodiments, the amine monomers are of the structural formula: 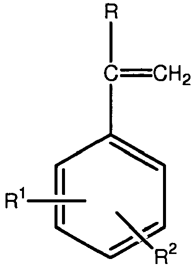 where R can be an alkyl group with from 1 carbon atom to 10 carbon atoms or a hydrogen atom. In some embodiments, R is a hydrogen or a methyl group. R¹ and R² can be the same or different and can be hydrogen atoms or a functional group. In some embodiments, R¹ and R² are not both hydrogen atoms. In some embodiments, at least one of R¹ and R² can be a moiety selected from the formula: 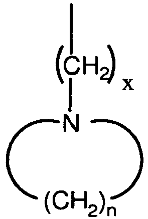 where n can be from 1 to 10 and x can be from 1 to 10.

In some embodiments, the amine monomers have the following structural formulas: 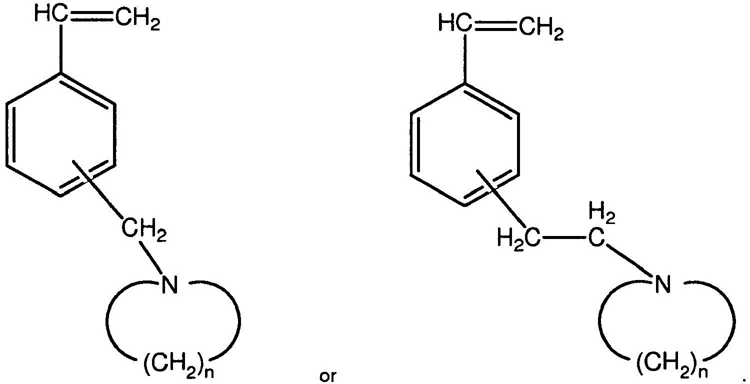 wherein n is an integer from 4 to 10. For example, n can be 4 or 6.

In some embodiments, the amine monomer is selected from

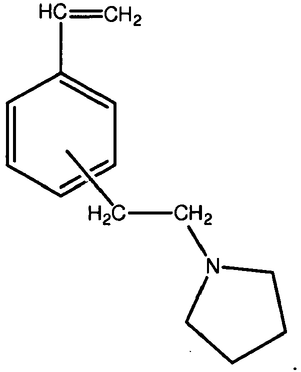

In some embodiments, the amine monomer can be synthesized by reacting a secondary amine with vinyl aromatic halide, such as vinyl benzyl chloride, in the presence of a base to produce the amine styrene monomer. This procedure can be depicted as follows: 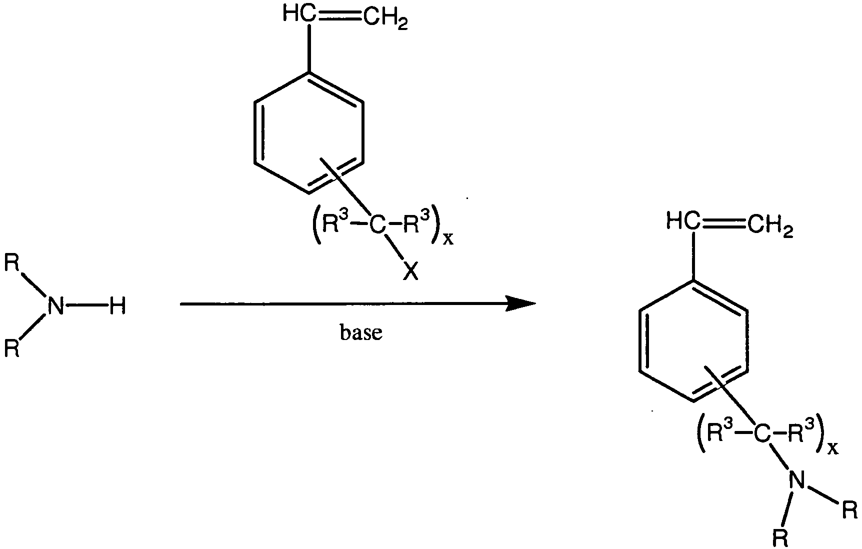 wherein x can be an integer from 1 to 10 and X can be a halogen atom.

In some embodiments, this reaction is conducted at a temperature that is at least -20°C or at least - 10°C, preferably at least 0°C, and/or no more than 40°C or no more than 30°C, or preferably no more than 25°C. The base can be an organic base or an inorganic base. Examples of organic bases include but are not limited to aromatic and aliphatic amines, triethylamine, aniline, and pyridine. Examples of inorganic bases include but are not limited to the salts of weak mineral acids such as sodium carbonate, calcium carbonate, sodium hydroxide, calcium hydroxide, and aluminum hydroxide. In some embodiments, after the reaction has been completed, volatile compounds can be removed under reduced pressure yielding the product as a viscous residue.

In some embodiments, amine monomers that contain cyclic amines can also be made by the same reaction scheme wherein a cyclic secondary amine is employed in the first step of the reaction. This reaction scheme can be depicted as follows: 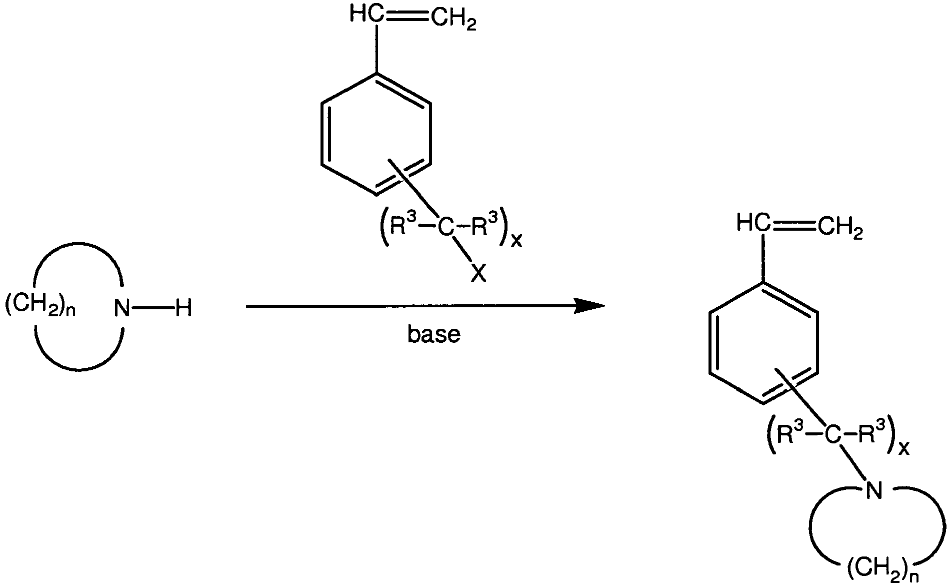 wherein x can be an integer from 1 to 10, n can be an integer from 4 to 10, and X can be a halogen atom.

The amine monomers can be copolymerized with virtually any monomer used to make synthetic rubber, including but not limited to dienes, such as conjugated diolefin monomers and hexadienes. In some instances the amine monomer can be copolymerized with at least one conjugated diolefin monomer, such as 1,3-butadiene or isoprene. Other monomers that are copolymerizable with conjugated diolefin monomers, such as vinyl aromatic monomers, can also be used.

In some embodiments, inventive polymers can be made by polymerizing a mixture of amine monomers and conjugated diolefin monomers with one or more ethylenically unsaturated monomers, such as vinyl aromatic monomers. The conjugated diolefin monomers which can be utilized in the synthesis of inventive polymers that can be coupled in accordance with this invention can contain from at least 4 carbons, no more than 8 carbons, or no more than 12 carbon. In some embodiments, 1,3-butadiene, isoprene, 2,3-dimethyl-1,3-butadiene, piperylene, 3-butyl-1,3-octadiene, 2-phenyl-1,3-butadiene, or mixtures thereof are utilized as conjugated diolefin monomers.

In some embodiments, the inventive polymer can be copolymerized with one or more diene monomers or with one or more other ethylenically unsaturated monomers and can contain at least 50 weight percentdienes (e.g., conjugated diolefin monomers), no more than 99 weight percent dienes (e.g., conjugated diolefin monomers), at least 1 weight percent of the other ethylenically unsaturated monomers, or no more than 50 weight percent of the other ethylenically unsaturated monomers. For example, copolymers of the amine monomers with conjugated diolefin monomers and vinylaromatic monomers, such as styrene-butadiene rubbers that contain from 50 to 95 weight percent conjugated diolefin monomers and from 5 to 50 weight percent vinylaromatic monomers, can be useful in some embodiments.

Ethylenically unsaturated monomers, including but not limited to vinyl aromatic monomers can be selected so as to be copolymerizable with the conjugated diolefin monomers being utilized. In some embodiments, any vinyl aromatic monomer that is known to polymerize with organolithium initiators can be used. Such vinyl aromatic monomers can contain at least 8 carbons, no more than 14 carbons or no more than 20 carbon atoms. Some examples of vinyl aromatic monomers that can be utilized include but are not limited to styrene, 1-vinylnaphthalene, 2-vinylnaphthalene, α-methylstyrene, 4-phenylstyrene, 3-methylstyrene and the like.

In some embodiments, at least 0.1 phm (parts by weight by 100 parts by weight of monomers), or no more than 99 phm of the amine monomer can be included in the polymerization. In some embodiments the amine monomer can be included in the inventive polymer at the following concentrations: at least 0.1 phm, at least 0.3 phm, at least 50 phm, at least 10 phm, no more than 2 phm, no more than 1 phm, no more than 0.7 phm or ranges from the combinations thereof.

In some embodiments, vinyl aromatic monomers, such as styrene or α-methyl styrene, can be copolymerized into the inventive polymer at a concentration of at least 1 phm or no more than 50 phm. Vinyl aromatic monomers can be incorporated into the inventive polymer at levels including but not limited to at least 10 phm, at least 15 phm, no more than 40 phm, no more than 30 phm, or ranges from the combinations thereof. For instance, the inventive polymer can comprise repeat units (i.e., monomers incorporated into the polymer) that are (a) from at least 58 weight percent 1,3-butadiene or from no more than 90 weight percent 1,3-butadiene, (b) from at least 8 weight percent styrene or from no more than 40 weight percent styrene, and (c) from at least 0.1 phm of the amine monomer or from no more than 2 phm of the amine monomer. In some embodiments, a inventive polymer can comprise repeat units that are (a) from at least 69 weight percent 1,3-butadiene or from no more than 85 weight percent 1,3-butadiene, (b) from at least 14 weight percent styrene or from no more than 30 weight percent styrene, and (c) from at least 0.2 phm of the amine monomer or from no more than 0.7 phm of the amine monomer.

Polymerization and recovery of polymer can be carried out according to various methods suitable for diene monomer polymerization processes. For example, this includes but is not limited to batchwise, semi-continuous, or continuous operations. In some instances, polymerization or recovery conditions can exclude air and other atmospheric impurities, such as oxygen or moisture. The polymerization of the amine monomers can be carried out in a number of different polymerization reactor systems, including but not limited to bulk polymerization, vapor phase polymerization, solution polymerization, suspension polymerization, and precipitation polymerization systems.

In some embodiments, the polymerization reaction can use an initiation system comprising an initiator such as an anionic initiator. The initiation system can depend upon the particular monomers being polymerized and the desired characteristics of the inventive polymer being synthesized. In solution polymerizations, embodiments of initiation systems include but are not limited to anionic initiators such as alkyl lithium compounds.

In some embodiments, the reaction temperature is at least 0°C, at least about 20°C, or at least 60°C. In other embodiments, the reaction temperature is no more than 150°C, no more than 120°C, or no more than 100°C. The reaction pressure is sufficiently high to maintain liquid-phase reaction conditions; it can be autogenic pressure, which can vary depending upon the components of the reaction mixture and the temperature, or it can be higher, e.g., up to 1000 psi.

In batch operations, the polymerization time of amine monomers can be varied as desired; it can be, for example, at least one minute or no more than several days. Polymerization in batch processes can be terminated when monomer is no longer incorporated, or earlier, if desired. In some embodiments, termination in batch processes can occur when the reaction mixture becomes too viscous. In continuous operations, the polymerization mixture can be passed through a reactor of any suitable design. In some embodiments of polymerization reactions in continuous operations, the residence times can be varied. In some instances, the residence times can depend on the type of reactor system. Some examples of residence time include but are not limited to at least 10 minutes, to at least 15 minutes, to no more than 24, or 24 or at least 24 or more hours.

In some embodiments, the concentration of monomer in the reaction mixture may depend on the conditions employed. The concentration of monomer in the reaction mixture can include but is not limited to at least 5 percent by weight of the reaction mixture, at least 20 percent by weight, or no more than 80 percent by weight.

The polymerization reactions according to this invention can be carried out in a suitable solvent that can be liquid under the conditions of reaction and can be relatively inert. The solvent can have the same number of carbon atoms per molecule as the diene reactant. The solvent can be in a different boiling range compared to that of the diene reactant. Solvents can include but are not limited saturated hydrocarbons such as alkanes (e.g., hexane), cycloalkanes (e.g., cyclohexane or methylcyclohexane), and mixtures thereof. In some embodiments, solvents can include but are not limited to aromatic hydrocarbons (e.g., benzene, toluene, isopropylbenzene, or xylene), halogenated aromatic compounds (e.g.. chlorobenzene, bromobenzene, or orthodichlorobenzen), tetrahydrofuran or dioxane. A mixture of any of the aforementioned solvents can be used.

The polymerization can be carried out to maximize amine monomer conversion in order to maximize the incorporation of the polymerizable amine monomer. Incremental addition or a chain transfer agent can be used in some embodiments, and can also be used, as one of several methods, to avoid excessive gel formation. After the polymerization is complete, the polymer can be recovered from a slurry or solution of the polymer through steam stripping. Steam stripping is the reclamation of a polymer from a hydrocarbon solution by means of driving off the hydrocarbon with steam heated water, sometimes under neutral pH conditions.

In some embodiments, the amine monomers can be polymerized with one or more comonomers. Adjustments in the polymerization recipe or reaction conditions can be made to obtain a desired rate of polymer formation, and can depend on several factors including, for example, the amount of amine monomer included and the other monomers involved.

As discussed above, comonomers that can be used include, but are not limited to, dienes (e.g., conjugated diolefin monomers) and ethylenically unsaturated monomers and mixture thereof. Mixtures of different amine monomers and mixtures of different comonomers (e.g., conjugated diolyfin monomers or ethylenically unsaturated monomers, together or separately) can be used. The monomer charge ratio by weight of amine monomer to total non-amine comonomer can be at least 0.10/99.9, at least 5/95, at least 10/90, no more than 99.9/0.10, no more than 80/20, or no more than 40/60. In some embodiments, the monomer charge weight ratio of amine monomer to diene monomer to ethylenically unsaturated monomer can range from 5:75:20 to 95:5:0. In some instances, monomer charge weight ratios can depend on the amount of chemical functionality desired to be incorporated and on the reactivity ratios of the monomers in the particular polymerization system used.

The amine monomers can randomly copolymerize with conjugated diolefin monomers in solution polymerizations that are conducted at temperatures of 20°C or higher. In some embodiments, the amine monomers are incorporated into a inventive polymer that is capable of being made by solution polymerization with an anionic initiator. Polymerization employed in synthesizing the inventive polymers can be carried out in a hydrocarbon solvent including but not limited to hydrocarbon solvents comprised of one or more aromatic, paraffinic, or cycloparaffinic compounds. In some embodiments, these solvents can contain from 4 to 10 carbon atoms per molecule and can be liquid under the conditions of the polymerization. Suitable organic solvents include but are not limited to pentane, isooctane, cyclohexane, methylcyclohexane, isohexane, n-heptane; n-octane, n-hexane, benzene, toluene, xylene, ethylbenzene, diethylbenzene, isobutylbenzene, petroleum ether, kerosene, petroleum spirits, petroleum naphtha, and mixtures thereof.

In the solution polymerization, there can be at least 5 weight percent monomers in the polymerization medium or no more than 30 weight percent monomers in the polymerization medium. The polymerization media comprise organic solvent and monomers. In some embodiments, the polymerization medium can contain at least 10 weight percent monomers, at least 15 weight percent monomers, no more than 25 weight percent monomers, or no more than 20 weight percent monomers.

The polymer may also be formed by random copolymerization of the amine monomer with a conjugated diolefin monomer or by the random terpolymerization of the amine monomer with a conjugated diolefin monomer and a vinyl aromatic monomer.

Some examples of polymers that can be functionalized with the amine monomers of this invention include but are not limited to polybutadiene, polyisoprene, styrene-butadiene rubber (SBR), α-methylstyrene-butadiene rubber, α-methylstyrene-isoprene rubber, styrene-isoprene-butadiene rubber (SIBR), styrene-isoprene rubber (SIR), isoprene-butadiene rubber (IBR), α-methylstyrene-isoprene-butadiene rubber and α-methylstyrene-styrene-isoprene-butadiene rubber. In cases where the polymer comprises repeat units that are derived from two or more monomers, the repeat units which are derived from the different monomers, including the amine monomers, can be distributed in a random manner.

In some embodiments, a polymer can be made by solution polymerization in a batch process or by using a continuous process by continuously charging at least one conjugated diolefin monomer, at least one amine monomer, and any additional monomers into a polymerization zone. The polymerization zone can be a polymerization reactor or a series of polymerization reactors. The polymerization zone can provide agitation to keep the monomers, polymer, initiator, and modifier well dispersed throughout the organic solvent the polymerization zone. Such continuous polymerizations can be conducted in a multiple reactor system. The polymer synthesized can be continuously withdrawn from the polymerization zone. The monomer conversion attained in the polymerization zone can be at least 85 percent or at least 90 percent.

The polymerization can be initiated with an anionic initiator, such as an alkyl lithium compound. The alkyl lithium compounds that can be used can include at least 1 carbon or no more than 8 carbon atoms such as n-butyl lithium.

The amount of the lithium initiator utilized can vary with the monomers being polymerized and with the molecular weight that is desired for the polymer being synthesized. In some embodiments, the amount of lithium initiator used can be at least 0.01 phm (parts per 100 parts by weight of monomer), at least 0.025 phm, no more than 0.07 phm, no more than 0.1 phm, or no more than 1 phm.

The polymerization process of this invention can be conducted in the presence of polar modifiers including but not limited to alkyltetrahydrofurfuryl ethers (e.g., methyltetrahydrofurfuryl ether, ethyltetrahydrofurfuryl ether, propyltetrahydrofurfuryl ether, butyltetrahydrodfurfuryl ether, hexyltetrahydrofurfuryl ether, octyltetrahydrofurfuryl ether, dodecyltetrahydrofurfuryl ether), diethyl ether, di-n-propyl ether, diisopropyl ether, di-n-butyl ether, tetrahydrofuran, dioxane, ethylene glycol dimethyl ether, ethylene glycol diethyl ether, diethylene glycol dimethyl ether, diethylene glycol diethyl ether, triethylene glycol dimethyl ether, trimethylamine, triethylamine, N,N,N',N'-tetramethylethylenediamine, N-methyl morpholine, N-ethyl morpholine, N-phenyl morpholine, or mixtures thereof.

The polar modifier can be employed at a concentration wherein the molar ratio of the polar modifier to the lithium initiator is at least 0.01:1, at least 0.25:1, at least 0.5:1, no more than 3:2, no more than 3:1, no more than 4:1, or no more than 5:1.

In some embodiments, the polymerization can be conducted utilizing an oligomeric oxolanyl alkane as the modifier. Such oligomeric oxolanyl alkanes can be of a structural formula selected from the group consisting of: 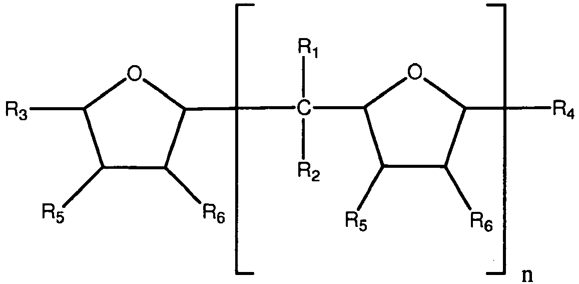 and 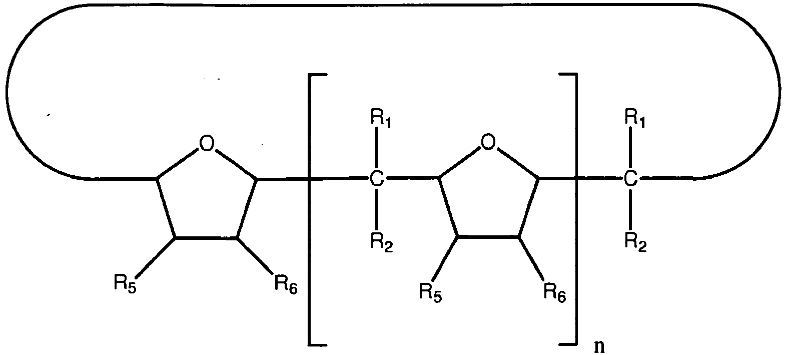 wherein n is an integer from 1 to 5, wherein m is an integer from 3 to 5, wherein R₁, R₂, R₃, R₄, R₅, and R₆ can be the same or different, and wherein R₁, R₂, R₃, R₄, R₅, and R₆ represent a member selected from the group consisting of a hydrogen atom and alkyl groups containing at least 1 carbon atom, no more than 4 carbon atoms, or no more than 8 carbon atoms.

The polymerization temperature can be at least 30°C, at least 45°C, at least 60°C, no more than 90°C, no more than 100°C, no more than 125°C, or nor more than 180°C. The pressure can be sufficient to maintain a liquid phase or a substantially liquid phase under the conditions of the polymerization reaction. In some instances, the pressure can be maintained such that the reactors operate above the vapor pressure of the reaction mixture.

The polymerization can be carried out until a certain amount of polymerization of the monomers. For example, the polymerization can be conducted for a length of time sufficient to permit substantially complete polymerization of monomers. In some embodiments, for example, polymerization can be carried out until at least about 85% polymerization of monomers is attained, until at least about 90% polymerization of the monomers is attained, or until at least about 95% polymerization of the monomers is attained.

The terminating compound (e.g., formula (I)) can terminate the polymer by reacting the terminating compound to an active terminal of the living polymer. In some embodiments, the amount of the terminating compound used can at least 0.7 molecule per one active terminal of the living polymer, or from 0.7 to 5.0 molecule per one active terminal of the living polymer, or from 0.7 to 2.0 molecule per one active terminal of the living polymer.

In some instances, a two-stage addition of the terminating compound can be used performed, wherein a small amount of the terminating compound terminating compound, other terminating agents, or a combination thereof is first added to an active terminal of the living polymer to form a polymer having a branched structure; the remaining active terminals can then be modified with a second addition of the terminating compound, other terminating agents, or a combination thereof. At least one stage should include a terminating compound or a mixture comprising it. One or more terminating compounds can be used in the in one or both stages. Additional stages (e.g., similar to those described) can be used, as desired.

The reaction (or any of the reaction stages) between an active terminal of the living polymer and the terminating compound can be performed by adding the terminating compound to the solution of polymerization system for the living polymer, or by adding the solution of the living polymer to a solution (e.g., an organic solution) comprising the terminating compound. The reaction temperature can be at least 30ºC, no more than +150ºC, or no more than +120ºC. The reaction time can be at least about 1 minute, at least about 5 minutes, no more than 5 hours, or no more than 2 hours.

In combination with using the terminating compounds of formula (I), the polymerization can be partially terminated by the addition of an agent, such as an alcohol, a terminating agent, or a coupling agent. In some embodiments, termination of polymerization by any method can occur when a desired amount of polymerization of the monomers has occurred. In some embodiments, termination occurs at least partially (and sometimes solely) using at least one termination compound of formula (I).

Coupling agents include but are not limited to tin halides, silicon halides or mixtures thereof. The coupling agent can be continuously added in some instances, such as where asymmetrical coupling is desired. Continuous addition coupling agents can be done in a reaction zone separate from the zone where the bulk of the polymerization is occurring. In some embodiments, the coupling agents can be added in a separate reaction vessel after the desired degree of conversion has been attained. The coupling agents can be added in a hydrocarbon solution, e.g., in cyclohexane, to the polymerization admixture with suitable mixing for distribution and reaction. The coupling can be added only after a high degree of conversion has been attained. For instance, the coupling agent can be added after a monomer conversion of at least 85 percent has occurred or after a monomer conversion of at least 90 percent has occurred.

The tin halides used as coupling agents can be tin tetrahalides (e.g., tin tetrachloride, tin tetrabromide, tin tetrafluoride, or tin tetraiodide) or tin trihalides. Polymers coupled with tin trihalides having a maximum of three arms, whereas polymers coupled with tin tetrahalides have a maximum of four arms. In some embodiments, to induce a higher level of branching, tin tetrahalides can be used.

The silicon coupling agents can be silicon tetrahalides (e.g., silicon tetrachloride, silicon tetrabromide, silicon tetrafluoride, or silicon tetraiodide) or silicon trihalides. Polymers coupled with silicon trihalides having a maximum of three arms, whereas polymers coupled with silicon tetrahalides that have a maximum of four arms. In some embodiments, to induce a higher level of branching, silicon tetrahalides can be used.

A combination of a tin halide and a silicon halide can be used to couple the polymer. By using such a combination of tin and silicon coupling agents improved properties for tire rubbers, such as lower hysteresis, can be attained. In some embodiments, a combination of tin and silicon coupling agents is used in tire tread compounds that contain both silica and carbon black. The molar ratio of the tin halide to the silicon halide employed in coupling the polymer can be at least 20:80, at least 40:60, at least 60:40, at least 65:35, no more than 80:20, no more than 85:15, no more than 90:10 or no more than 95:5.

In some embodiments, at least 0.01 milliequivalents of the coupling agent (e.g., tin halide, silicon halide, or mixture thereof) per 100 grams of the polymer is employed. In other embodiments, no more than 1.5 milliequivalents of the coupling agent per 100 grams of polymer or no more than 4.5 milliequivalents of the coupling agent per 100 grams of polymer is used. In some embodiments, the amount of coupling agent can be used to obtain the desired Mooney viscosity. In some instances, larger amount of coupling agents can result in production of polymers containing terminally reactive groups or insufficient coupling. In some embodiments, one equivalent of tin coupling agent per equivalent of lithium can provide maximum branching. For instance, if a mixture of tin tetrahalide and silicon tetrahalide is used as the coupling agent, one mole of the coupling agent would be utilized per four moles of live lithium ends. In other instances, where a mixture of tin trihalide and silicon trihalide is used as the coupling agent, one mole of the coupling agent will optimally be utilized for every three moles of live lithium ends. The coupling agent can be added in a hydrocarbon solution, e.g., in cyclohexane, to the polymerization admixture in the reactor with suitable mixing for distribution and reaction.

In some embodiments, after the coupling has been completed, a tertiary chelating alkyl 1,2-ethylene diamine or a metal salt of a cyclic alcohol can be added, and in some instances this can stabilize the coupled polymer. Some examples of tertiary chelating amines that can be used include but are not limited to chelating alkyl diamines of the structural formula: 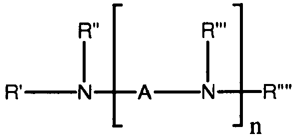 wherein n represents an integer from 1 to 6, wherein A represents an alkylene group containing from 1 to 6 carbon atoms and wherein R', R", R"' and R"" can be the same or different and represent alkyl groups containing from 1 to 6 carbon atoms. The alkylene group A can be of the formula (CH₂)ₘ wherein m is an integer from 1 to 6.

In some embodiments, the amount of chelating alkyl 1,2-ethylene diamine or metal salt of the cyclic alcohol that can be added can be at least 0.01 phr (parts by weight per 100 parts by weight of dry rubber), at least 0.05 phr, at least 0.1 phr, no more than 0.6 phr, no more than 1 phr, or no more than 2 phr. In some embodiments, the amount of chelating alkyl 1,2-ethylene diamine or metal salt of the cyclic alcohol added to the polymer cement can stabilize the polymer.

Together with the terminating compound of formula I, the terminating agents can be used to stop the polymerization and to "terminate" the living polymer. Terminating agents include but are not limited to tin monohalides, silicon monohalides, N,N,N',N'-tetradialkyldiamino-benzophenones (e.g., tetramethyldiaminobenzophenone and the like), N,N-dialkylamino-benzaldehydes (e.g., dimethylaminobenzaldehyde and the like), 1,3-dialkyl-2-imidazolidinones (e.g., 1,3-dimethyl-2-imidazolidinone and the like), 1-alkyl substituted pyrrolidinones; 1-aryl substituted pyrrolidinones, dialkyl- dicycloalkyl-carbodiimides containing at least 5 carbon atoms or nor more than 20 carbon atoms, and dicycloalkyl-carbodiimides containing at least 5 carbon atoms or nor more than 20 carbon atoms.

After the termination step, and optionally a stabilization step, has been completed, the polymer can be recovered from the organic solvent. The coupled polymer can be recovered from the organic solvent and residue by means such as chemical (e.g., alcohol) coagulation, thermal desolventization, steam stripping, or other suitable method. For instance, the polymer can be precipitated from the organic solvent by the addition to the polymer solution of lower alcohols containing from 1, 2, 3, or 4 carbon atoms. Examples, of lower alcohols that can be used for precipitation of the polymer include but are not limited to methanol, ethanol, isopropyl alcohol, normal-propyl alcohol, and t-butyl alcohol. The utilization of lower alcohols to precipitate the polymer can also "terminate" any remaining living polymer by inactivating lithium end groups.

After the coupled polymer is recovered from the solution, steam-stripping can be employed to reduce the level of volatile organic compounds in the coupled polymer. Additionally, the organic solvent can be removed from the polymer by drum drying, extruder drying, vacuum drying, and the like.

One example of a steam stripping procedure follows. Polymer/hydrocarbon solutions are fed from storage tanks or polymerization reactors to a steam stripper, which in one example can be a nominal 500-gallon steam sparged, agitated vessel. Two axial flow turbines turning at 210 rpm provided agitation in the stripper. Polymer/hydrocarbon solution is pumped through a nozzle entering the bottom of the stripper. Steam is injected through two other nozzles entering the bottom of the stripper. Steam and recycle water rates are variable as they are used to control temperature and stripper level, respectively. Surfactant is used in the stripper to help control polymer crumb size formation. From the stripper, crumb water slurry is dumped on a horizontal shaker screen to remove the bulk of the free water. On the shaker screen, crumb slurries of 1-2% by polymer weight are routinely concentrated to 50-60% polymer. This material is fed directly to an Anderson 6D expeller, which is equipped with a variable frequency drive motor. Polymer exiting the expeller is then fed directly into an Anderson 4.5-inch expander for final drying. From the expander, polymer crumb is shaker conveyed to a spiral conveyor to promote additional cooling. From the spiral conveyor, the dry polymer is dropped to collection bins, weighed, and baled. In place of a mechanical expander dryer conventional forced air oven or conveyer driers can be used.

Another component of the rubber composition preferably is a cis 1,4-polybutadiene elastomer having a microstructure comprising 96 to 99 percent cis 1,4-isomeric units, 0.1 to 1 percent trans 1,4-isomeric units and from 1 to 3 percent vinyl 1,2-isomeric units and a number average molecular weight (Mn) in a range of from 75,000 to 150,000 (relatively low Mn for a cis 1,4-polybutadiene elastomer). Preferably, the polybutadiene has a heterogeneity index (Mw/Mn) in a range of from 3/1 to 5/1 (a relatively high heterogeneity index range illustrating a significant disparity between its weight average and number average molecular weights).

Measurement of the number average molecular weight (Mn) and the weight average molecular weight (Mw) are routinely done using, for instance, gel permeation chromatography (GPC).

The cis 1,4-polybutadiene elastomer may be prepared, for example, by organic solvent solution polymerization of 1,3-butadiene monomer in the presence of a catalyst comprising an organonickel or organocobalt compound, an organoaluminum compound, a fluorine-containing compound, and a para styrenated diphenylamine which is exemplified in US-B- 5,451,646. Such catalyst components may comprise nickel octoate, triisobutylaluminum, hydrogen fluoride and para styrenated diphenylamine.

The relatively broad heterogeneity index (Mw/Mn ratio range of 3/1 to 5/1) of the cis 1,4-polybutadiene elastomer is considered herein to be significant to promote improved processing of the unvulcanized rubber composition of which a major, rather than a minor, fraction of its rubber component is the cis 1,4-polybutadiene rubber, in a sense of promoting a relatively smooth surfaced extrudate, as compared to similar and more typical cis 1,4-polybutadiene elastomers rubber having the aforesaid significantly higher molecular weight and significantly lower heterogeneity index in a range of from 1.5/1 to 2.5/1. The cis 1,4-polybutadiene elastomer is also considered herein to be unique in that it is configured with a level, or degree, of branching.

In one embodiment, the rubber composition includes from 40 to 10 phr of the polybutadiene rubber. Suitable specialized polybutadiene rubber is available commercially, such as Budene® 4001 from Goodyear.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials.

The vulcanizable rubber composition may include from 50 to 150 phr of silica.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

Various commercially available silicas may be used, such as, only for example herein, silicas commercially available from PPG Industries under the Hi-Sil trademark with designations 210 and 243; silicas available from Rhodia, with, for example, designations of Z1165MP and Z165GR and silicas available from Degussa AG with, for example, designations VN2 and VN3.

The vulcanizable rubber composition may include from 5 to 50 phr of carbon black

Commonly employed carbon blacks can be used as a conventional filler. Representative examples of such carbon blacks include N110, N121, N134, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

The vulcanizable rubber composition may include both silica and carbon black in any weight ratio of silica to carbon black. In one embodiment, the vulcanizable rubber composition includes both silica and carbon black in approximately the same weight amounts, i.e., a weight ratio of 1.

Other fillers may be used in the rubber composition including particulate fillers including ultra high molecular weight polyethylene (UHMWPE), particulate polymer gels such as those disclosed in US-B-6,242,534; US-B- 6,207,757; US-B- 6,133,364; US-B- 6,372,857; US-B- 5,395,891; or US-B- 6,127,488, and plasticized starch composite filler such as that disclosed in US-B- 5,672,639.

It may be preferred to have the rubber composition for use in the tire component to additionally contain a conventional sulfur containing organosilicon compound. Examples of suitable sulfur containing organosilicon compounds are of the formula:

Z-Alk-Sₙ-Alk-Z VIII

in which Z is selected from the group consisting of 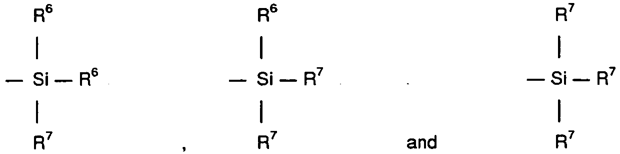 where R⁶ is an alkyl group of 1 to 4 carbon atoms, cyclohexyl or phenyl; R⁷ is alkoxy of 1 to 8 carbon atoms, or cycloalkoxy of 5 to 8 carbon atoms; Alk is a divalent hydrocarbon of 1 to 18 carbon atoms and n is an integer of 2 to 8.
Preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore, as to formula VIII, preferably Z is 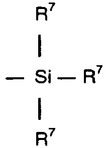 where R⁷ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include compounds disclosed in US-A- 2006/0041063. In one embodiment, the sulfur containing organosilicon compounds include the reaction product of hydrocarbon based diol (e.g., 2-methyl-1 ,3-propanediol) with S-[3-(triethoxysilyl)propyl] thiooctanoate. In one embodiment, the sulfur containing organosilicon compound is NXT-Z™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound of formula I in a rubber composition will vary depending on the level of other additives that are used. Generally speaking, the amount of the compound of formula I will range from 0.5 to 20 phr.

It is readily understood by those having skill in the art that the rubber composition can be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1.5 to 6 phr being preferred. Typical amounts of tackifier resins, if used, comprise 0.5 to 10 phr, usually 1 to 5 phr. Typical amounts of processing aids comprise 1 to 50 phr. Such processing aids can include, for example, aromatic, naphthenic, paraffinic, and low PCA (polycyclic aromatic) oils such as MES, TDAE, heavy naphthenic, and SRAE processing oils. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including a tread cap or a tread base), a sidewall, an apex, a chafer, a sidewall insert, a wirecoat or an innerliner. Preferably, the compound is a tread.

The pneumatic tire of the present invention may be a race tire, passenger tire, aircraft tire, agricultural, earthmover, off-the-road, truck tire, and the like. Preferably, the tire is a passenger or truck tire. The tire may be a radial or bias, with a radial being preferred.

Vulcanization of the pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating the present invention. All parts are parts by weight unless specifically identified otherwise.

### Example 1

Preparation of functional co-monomer Pyrrolidinoethylstyrene (PES): The following equation shows the overall reaction for making PES.

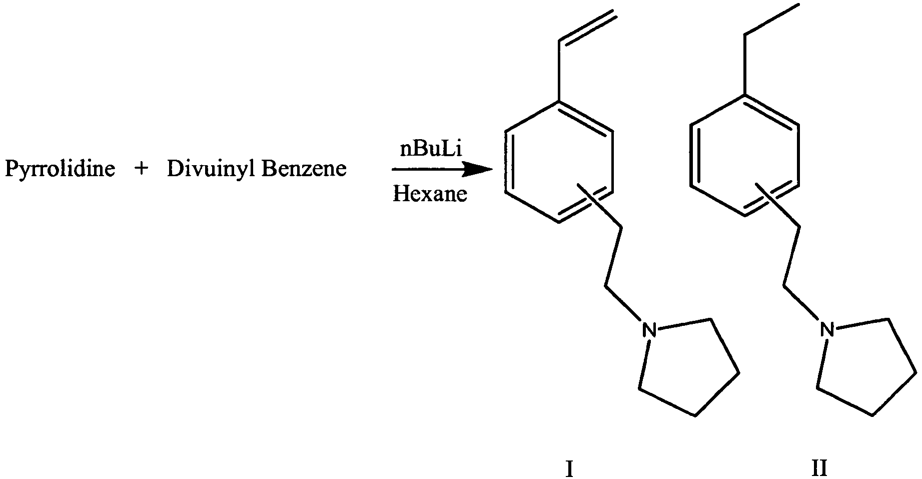

The desired products are a mixture of 3- and 4- (2-pyrrolidinoethyl) styrene (I) while the minor byproducts are a mixture of 3- and 4-(2-pyrrolidinoethyl)-1-ethyl benzene (II) that is formed from the impurity in divinyl benzene (DVB).

Equipment: 1 L reactor capable of operating around 0°C, Distillation setup capable of achieving 150°C and 5 mm-Hg or better vacuum, GC for purity determination - HP 5890A or equivalent.

### Recipe:

| **Reaction** | **Parts** | **Weight** | **Volume** |
|---|---|---|---|
| Solvent hexane | 356.6312 | 310.79 g | 471.60 ml |
| N Pyrrolidine | 100.0000 | 85.00 g | 99.77 ml |
| Vinyl 80% DVB | 228.8210 | 194.50 g | 0.06 gal |
| Li n-BuLi 1.60M | 13.1898 | 11.21 g | 16.60 ml |
| Density 0.751 g/ml | | | |
| **Total** | 694.4522 | 601.54 g | 800.77 ml |
| Termination Isopropanol | 2.8168 | 2.3943 g | 3.0501 ml |
| Stabilization Prostab 5415 5000ppm | 3.5385 | 3.0077 g | N/A |

| Stabilization | Modifier/Li | N/vinyl | N/Li | Actives | SS/Li |
|---|---|---|---|---|---|
| 5000 ppm | 0.00 | 1.00 | 45.00 | 40.00% | 1.50 |

Impurities such as water and t-butylcatechol (tBC) were removed from the starting materials since they can react with n-BuLi. Pyrrolidine and hexane are dried over 3A molecular sieves and DVB is dried over alumina. Prostab® 5415 is bis(1-oxyl-2,2,6,6- tetramethylpiperidine-4-yl)sebacate.

### Synthetic and Purification Procedures:

### Reaction

Hexane, pyrrolidine, and DVB were transferred into the reactor. The contents were cooled down to 5°C or lower. nBuLi was added slowly to maintain the temperature within the range of 0°C to 5°C. If the temperature exceeded the range, addition of nBuLi was suspended until the temperature returned to normal. The solution had a fairly intense green color during the reaction but turned brownish red at the end. The progress of the reaction was monitor by taking GC samples. 80% to 85% conversion indicated an approach to the end of the reaction. At the end of the reaction, the active Li was terminated by injecting isopropanol. Prostab 5415 was used as a stabilizer to prevent polymerization.

### Purification

The Prostab stabilizer prevented rapid polymerization from taking place during distillation, which could yield little or no desired product. The mixture was transferred into a round bottom flask along with boiling chips. Pressure was decreased slowly using a vacuum pump to achieve a vacuum of about 1-2 mm Hg. Ambient temperature was maintained to remove hexane and pyrrolidine. When the boiling stopped, the temperature was raised to 60°C - 90°C to remove unreacted DVB. Boiling likely stopped when all of the unreacted DVB was removed because the main product will boil at about 120°C.

The retention times for the target materials using the above method were
3-(2-pyrrolidinoethyl) styrene = 24.473 minutes
4-(2-pyrrolidinoethyl) styrene = 25.370 minutes

The retention times for the impurities, reaction products of the pyrrolidine with 3 & 4 ethyl benzene were
3-(2-pyrrolidinoethyl)-1-ethyl benzene = 22.922 minutes
4-(2-pyrrolidinoethyl)-1-ethyl benzene = 23.640 minutes

### Example 2

Preparation of control polymer: Polymerizations were carried out in a twenty seven gallon batch reactor under moderate stirring and inert nitrogen atmosphere. The reactor was equipped with a variable speed agitator with 2 AFTs (axial flow turbine). Heating and cooling to control the reactor temperature was accomplished with a reactor jacket circulating gycol. The glycol was heated with steam when needed. Prior to polymerization, the reactor was filled with dry hexane and quenched with n-BuLi to minimize the scavenger level. Premix consisting of a dilute solution of 25/75 wt/wt styrene/butadiene in hexane was dried over a silica gel bed and held in a hold vessel until needed. A weighed amount of this dried monomer premix was transferred into the reactor. The reactor was heated to a set point 150°F (65.5°C); the modifier TMEDA (tetramethylelthylenediamine) was pressured into the reactor. After it mixed in, n-BuLi initiator was pressured into the reactor. The reaction was then allowed to run its course and conversion data was determined gravimetrically or by gas chromatography (GC) analysis of residual monomer. Polymerizations were terminated after full conversion was reached by treating with isopropanol. The target polymer Mooney Viscosity was 40 with a glass transition temperature of approximately -25ºC. Prior to polymer finishing via steam stripping, 0.5 phr Polystay K antioxidant was added as antioxidant.

### Example 3

Preparation of TEOS terminated polymers: TEOS terminated polymers were prepared as described in Example 2 with the exception that isopropanol termination was replaced with the addition of 1 molar equivalent of TEOS per mole of butyl-lithium used to initiate the polymerization. Base Mooney viscosity prior to the termination was approximately 40 for all polymers and Tg was -25ºC.

### Example 4

Preparation of TEOS terminated polymers with PES monomers: TEOS terminated polymers with PES monomers were prepared as described in Example 3 with the exception that 0.25 wt% PES co-monomer was added to the styrene/butadiene premix prior to initiation. Base Mooney viscosity prior to the termination was approximately 40 for all polymers and Tg was -25ºC.

### Example 5

Three polymer types were prepared as described in Example 2 (control polymer), Example 3 (TEOS polymer) and Example 4 (PES-TEOS polymer).

Table 1 shows the characterization of the 3 polymers

**Table 1: Polymer Characterization**

| **Polymer** | **Control (a)** | **TEOS (b)** | **PES-TEOS (c)** |
|---|---|---|---|
| ML(1+4) 100C | 40 | 61 | 69 |
| Tg (midpt) C | -28.0 | -26.8 | -27.2 |
| % Styrene | 24.8 | 25.0 | 25.0 |
| % Vinyl | 40.2 | 38.3 | 37.4 |

## Claims

1. A rubber composition comprising, based on 100 parts by weight of elastomer (phr):
(A) from 60 to 90 phr of a polymer comprising:
(1) a terminating group provided from a terminating compound
XₙSi(OR)ₘR'₄₋ₘ₋ₙ
wherein X is a chlorine atom, a bromine atom or an iodine atom, R is an alkyl group with from 1 carbon to 7 carbons, R' is a alkyl group with from 1 carbon to 20 carbons, an aryl group, a vinyl group or a halogenated alkyl group, m is an integer from 1 to 4, n is an integer from 0 to 2, and wherein the sum of n and m is from 1 to 4;
(2) repeat units comprising:
(a) a repeat unit provided from a conjugated diolefin monomer, and
(b) a repeat unit provided from an amine monomer;
(B) from 40 to 10 phr of polybutadiene having a microstructure comprising from 96 to 99 percent cis 1,4-isomeric units, from 0.1 to 1 percent trans 1,4-isomeric units and from 1 to 3 percent vinyl 1,2-isomeric units; and
(C) from 50 to 150 phr of silica.

2. The rubber composition of claim 1 wherein the polybutadiene has a heterogeneity index (Mw/Mn) in a range of from 3/1 to 5/1, and/or a number average molecular weight (Mn) in a range of from 75,000 to 150,000.

3. The rubber composition of claim 1 wherein the rubber composition comprises 50 to 100 phr of silica and/or wherein the rubber composition further comprises from 5 to 50 phr of carbon black.

4. The rubber composition of at least one of the previous claims wherein the amine monomer is an amine styrene monomer.

5. The rubber composition of claim 1 or 4 wherein the amine monomer has a formula selected from the group consisting of:
(a) 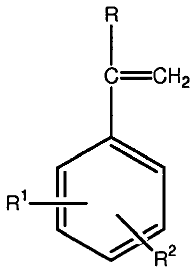 wherein R is an alkyl group with from 1 carbon atom to 10 carbon atoms or a hydrogen atom; R¹ and R² can be the same or different and is hydrogen or an amine functional group; wherein R¹ and R² are preferably not both hydrogen atoms; and wherein preferably at least one of R¹ and R² is a moiety selected from: 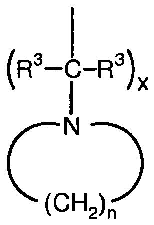 or 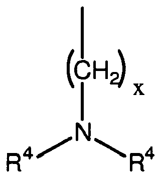 or 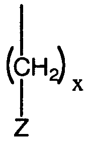 wherein the R³ within the repeat units and in different repeat units can be the same or different and is hydrogen or alkyl groups with from 1 carbon atom to 4 carbon atoms; n is from 1 to 10; x is from 1 to 10; R⁴ can be the same or different and is selected from the group consisting of alkyl groups with from 1 to 10 carbon atoms, aryl groups, allyl groups, and alklyoxy groups having the structural formula -(CH₂)_{y}-O-(CH₂)_{z}-CH₃, wherein y is an integer from 1 to 10 and z is an integer from 1 to 10; and Z is a nitrogen-containing heterocyclic compound;
(b) 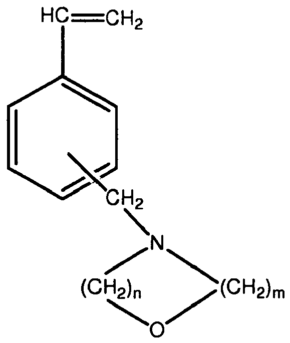 wherein n is an integer from 1 to 10 and m is an integer from 1 to 10;
(c) 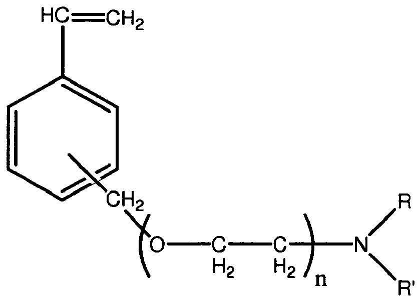 wherein n is an integer from 1 to 10, and R and R' can be the same or different and are alkyl groups with from 1 carbon atom to 10 carbon atoms;
(d) 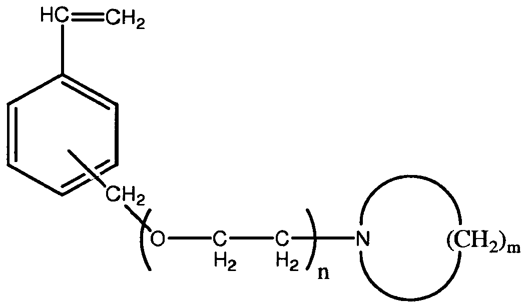 wherein n is an integer from 1 to 10 and m is an integer from 4 to 10;
(e) 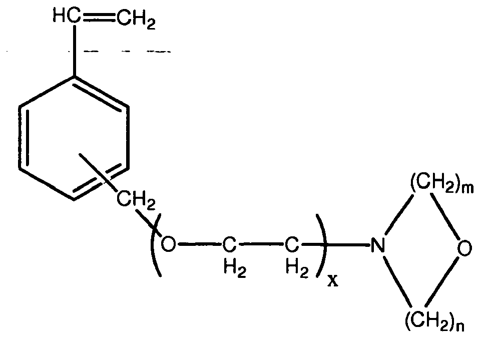 wherein x is an integer from 1 to 10, n is an integer from 1 to 10 and m is an integer from 1 to 10;
(f) 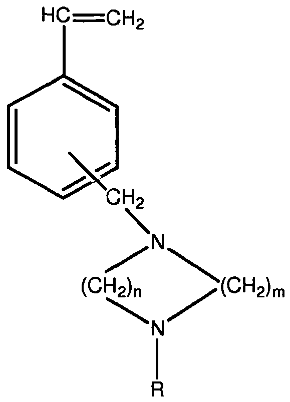 wherein R is a hydrogen atom or an alkyl group with from 1 carbon atom to 10 carbon atoms; n is an integer from 1 to 10; m is an integer from 1 to 10; and
(g) 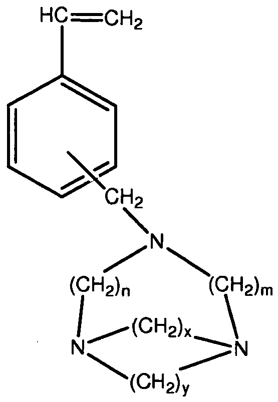 wherein n is an integer from 1 to 10, m is an integer from 1 to 10, x is an integer from 1 to 10, and y is an integer from 1 to 10.

6. The rubber composition of at least one of the previous claims wherein the amine monomer is: 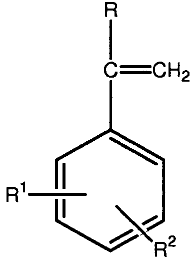 wherein R is an alkyl group with from 1 carbon atom to 10 carbon atoms or a hydrogen atom; wherein R¹ and R² are not both hydrogen atoms, and wherein at least one of R¹ and R² are moieties selected from the formula: 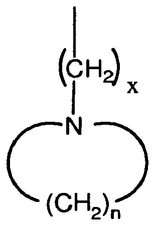 wherein n is from 1 to 10 and x is from 1 to 10.

7. The rubber composition of at least one of the previous claims wherein the amine monomer is: 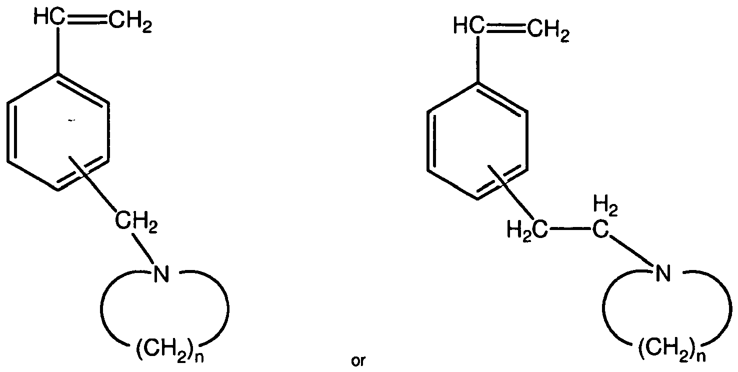 wherein n is an integer from 4 to 10.

8. The rubber composition of claim 5 wherein the nitrogen-containing heterocyclic group (Z group) mentioned in formula (a) is selected from the group consisting of: 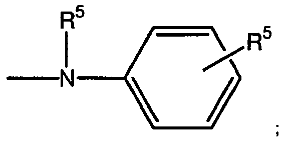 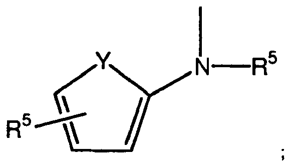 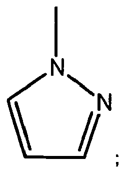 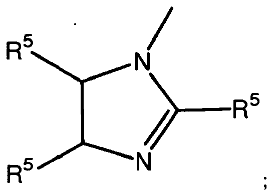 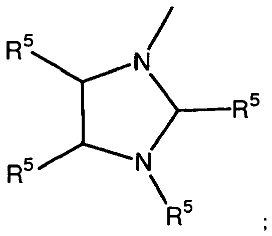 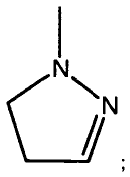 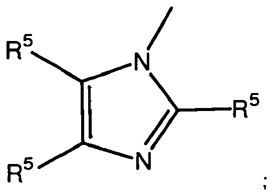 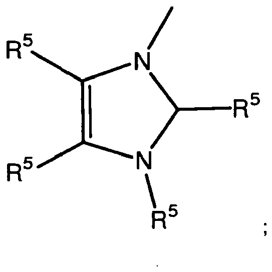 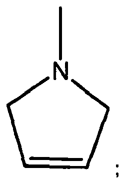 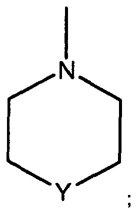 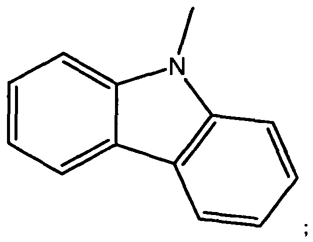 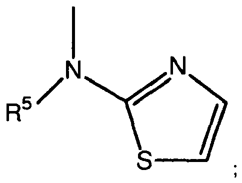 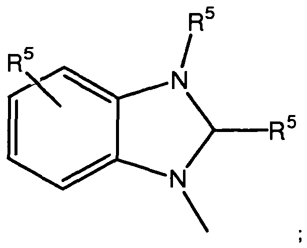 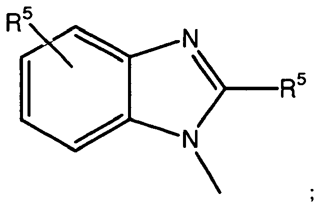 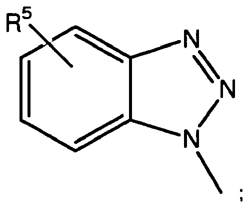 and 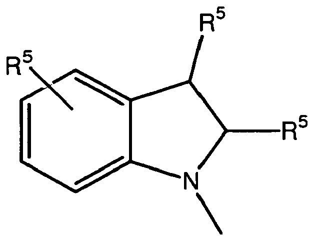 wherein the R⁵ group(s) can be the same or different and is selected from the group consisting of alkyl groups with from 1 carbon atom to 10 carbon atoms, aryl groups, allyl groups, and alkoxy groups; and Y is oxygen, sulfur, or a methylene group.

9. The rubber composition of at least one of the previous claims wherein the amine monomer is:

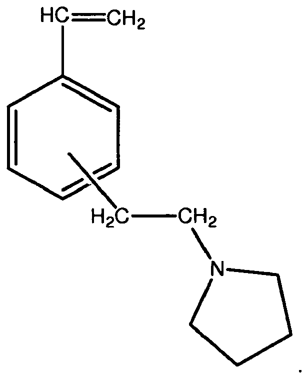

10. The rubber composition of at least on of the previous claims wherein the at least one terminating compound is hydrolyzable.

11. The rubber composition of at least one of the previous claims wherein R is an alkyl group having 1 to 3 carbon atoms.

12. The rubber composition of at least one of the previous claims wherein the at least one terminating compound is:
Si(OCH₂CH₃)₄.

13. A method of manufacturing a rubber composition in accordance with at least one of the previous claims wherein steam stripping is used to isolate, purify, or recover the polymer.

14. A pneumatic tire having a component comprising a rubber composition in accordance with at least one of the claims 1 to 12.

## Patentansprüche

1. Kautschukzusammensetzung, umfassend, auf Basis von 100 Gewichtsteilen Elastomer (ThK):
(A) 60 bis 90 ThK eines Polymers, umfassend:
(1) eine von einer terminierenden Verbindung bereitgestellte terminierende Gruppe
XₙSi(OR)ₘR'₄₋ₘ₋ₙ
wobei X ein Chloratom, ein Bromatom oder ein lodatom ist, R eine Alkylgruppe mit 1 Kohlenstoffatom bis 7 Kohlenstoffatomen ist, R' eine Alkylgruppe mit 1 Kohlenstoffatom bis 20 Kohlenstoffatomen, eine Arylgruppe, eine Vinylgruppe oder eine halogenierte Alkylgruppe ist, m eine ganze Zahl von 1 bis 4 ist, n eine ganze Zahl von 0 bis 2 ist, und wobei die Summe von n und m 1 bis 4 beträgt;
(2) Repetiereinheiten, umfassend:
(a) eine von einem konjugierten Diolefinmonomer bereitgestellte Repetiereinheit, und
(b) eine von einem Aminmonomer bereitgestellte Repetiereinheit;
(B) 40 bis 10 ThK Polybutadien mit einer Mikrostruktur, umfassend 96 bis 99 Prozent cis-1,4-Isomereinheiten, 0,1 bis 1 Prozent trans-1,4-Isomereinheiten und 1 bis 3 Prozent Vinyl-1,2-Isomereinheiten; und
(C) 50 bis 150 ThK Silika.

2. Kautschukzusammensetzung nach Anspruch 1, wobei das Polybutadien einen Heterogenitätsindex (Mw/Mn) in einem Bereich von 3:1 bis 5:1 und/oder eine zahlenmittlere Molmasse (Mn) in einem Bereich von 75.000 bis 150.000 aufweist.

3. Kautschukzusammensetzung nach Anspruch 1, wobei die Kautschukzusammensetzung 50 bis 100 ThK Silika umfasst und/oder wobei die Kautschukzusammensetzung weiter 5 bis 50 ThK Carbon Black umfasst.

4. Kautschukzusammensetzung nach mindestens einem der vorgenannten Ansprüche, wobei das Aminmonomer ein Amin-Styrolmonomer ist.

5. Kautschukzusammensetzung nach Anspruch 1 oder 4, wobei das Aminmonomer eine Formel aufweist, ausgewählt aus der Gruppe bestehend aus:
(a) 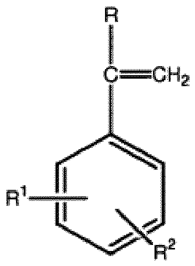 wobei R eine Alkylgruppe mit 1 Kohlenstoffatom bis 10 Kohlenstoffatomen oder ein Wasserstoffatom ist; R¹ und R² das gleiche oder verschieden sein kann und Wasserstoff oder eine funktionelle Amingruppe ist; wobei R¹ und R² bevorzugt nicht beide Wasserstoffatome sind; und wobei bevorzugt mindestens eines von R¹ und R² ein Anteil ist, ausgewählt aus: 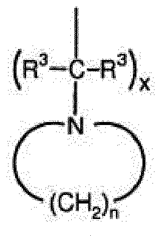 oder 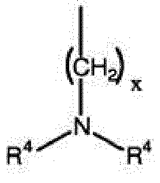 oder 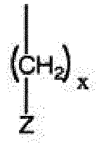 wobei das R³ innerhalb der Repetiereinheiten und in verschiedenen Repetiereinheiten das gleiche oder verschieden sein kann und Wasserstoff oder Alkylgruppen mit 1 Kohlenstoffatom bis 4 Kohlenstoffatomen ist; n 1 bis 10 ist; x 1 bis 10 ist; R⁴ das gleiche oder verschieden sein kann und aus der Gruppe ausgewählt ist, bestehend aus Alkylgruppen mit 1 bis 10 Kohlenstoffatomen, Arylgruppen, Allylgruppen, und Alkyloxygruppen mit der Strukturformel -(CH₂)_{y}-O-(CH₂)_{z}-CH₃, wobei y eine ganze Zahl von 1 bis 10 ist und z eine ganze Zahl von 1 bis 10 ist; und Z eine stickstoffhaltige heterozyklische Verbindung ist;
(b) 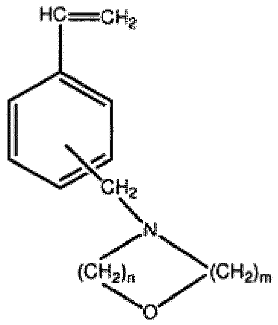 wobei n eine ganze Zahl von 1 bis 10 ist und m eine ganze Zahl von 1 bis 10 ist;
(c) 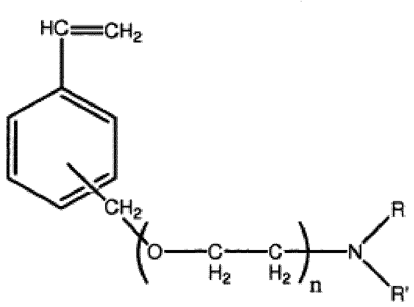 wobei n eine ganze Zahl von 1 bis 10 ist und R und R' das gleiche oder verschieden sein können und Alkylgruppen mit 1 Kohlenstoffatom bis 10 Kohlenstoffatomen sind;
(d) 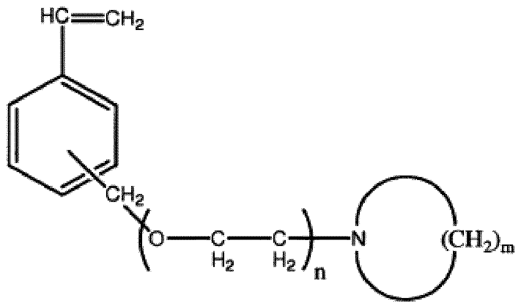 wobei n eine ganze Zahl von 1 bis 10 ist und m eine ganze Zahl von 4 bis 10 ist;
(e) 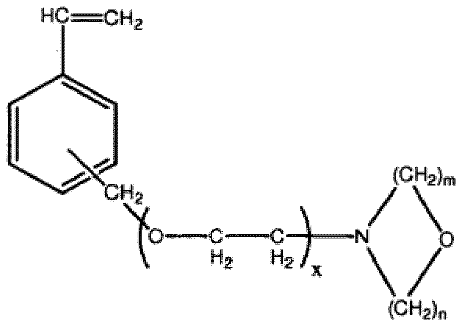 wobei x eine ganze Zahl von 1 bis 10 ist, n eine ganze Zahl von 1 bis 10 ist und m eine ganze Zahl von 1 bis 10 ist;
(f) 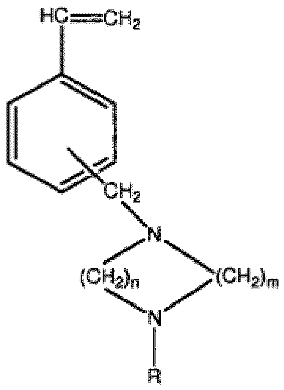 wobei R ein Wasserstoffatom oder eine Alkylgruppe mit 1 Kohlenstoffatom bis 10 Kohlenstoffatomen ist; n eine ganze Zahl von 1 bis 10 ist; m eine ganze Zahl von 1 bis 10 ist; und 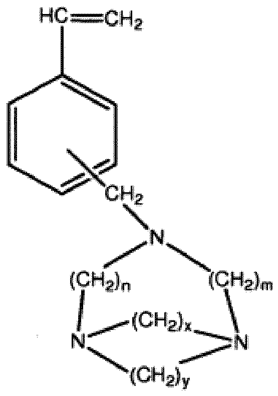 wobei n eine ganze Zahl von 1 bis 10 ist, m eine ganze Zahl von 1 bis 10 ist, x eine ganze Zahl von 1 bis 10 ist und y eine ganze Zahl von 1 bis 10 ist.

6. Kautschukzusammensetzung nach mindestens einem der vorgenannten Ansprüche, wobei das Aminmonomer ist: 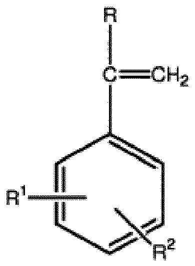 wobei R eine Alkylgruppe mit 1 Kohlenstoffatom bis 10 Kohlenstoffatomen oder ein Wasserstoffatom ist; wobei R¹ und R² nicht beide Wasserstoffatome sind, und wobei mindestens eines von R¹ und R² Anteile sind, ausgewählt aus der Formel: 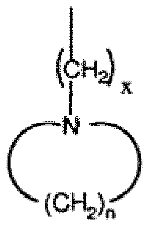 wobei n 1 bis 10 ist und x 1 bis 10 ist.

7. Kautschukzusammensetzung nach mindestens einem der vorgenannten Ansprüche, wobei das Aminmonomer ist: 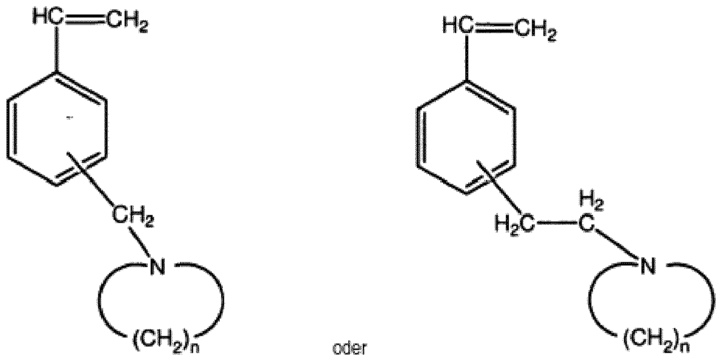 wobei n eine ganze Zahl von 4 bis 10 ist.

8. Kautschukzusammensetzung nach Anspruch 5, wobei die in Formel (a) erwähnte stickstoffhaltige heterozyklische Gruppe (Z-Gruppe) aus der Gruppe ausgewählt ist, bestehend aus: 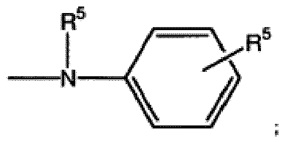 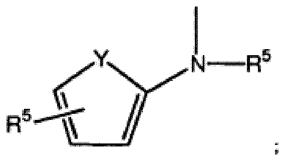 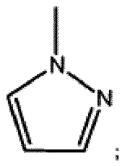 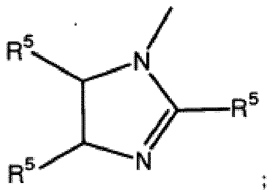 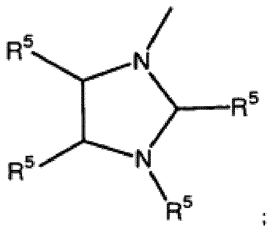 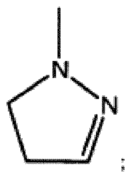 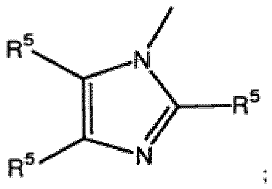 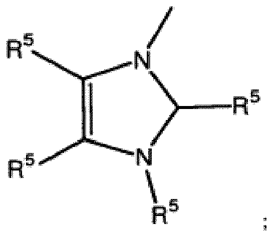 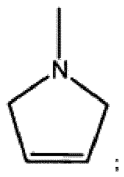 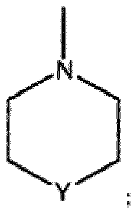 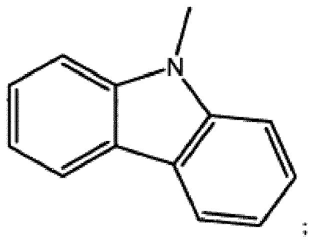 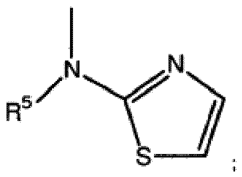 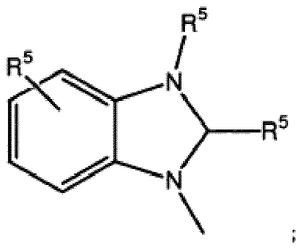 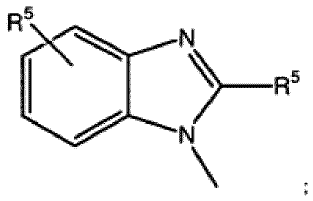 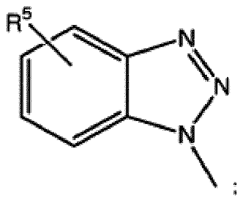 et 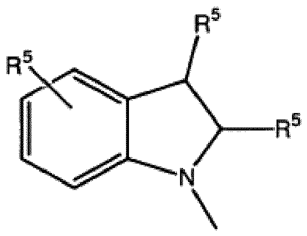 wobei die R⁵-Gruppe(n) die gleiche oder verschieden sein kann und aus der Gruppe ausgewählt ist, bestehend aus Alkylgruppen mit 1 Kohlenstoffatom bis 10 Kohlenstoffatomen, Arylgruppen, Allylgruppen, und Alkoxygruppen; und Y Sauerstoff, Schwefel oder eine Methylengruppe ist.

9. Kautschukzusammensetzung nach mindestens einem der vorgenannten Ansprüche, wobei das Aminmonomer ist:

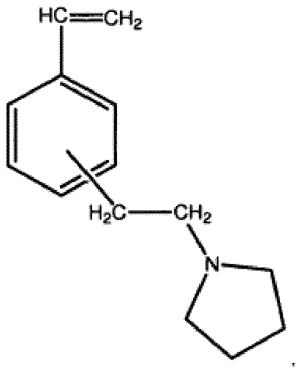

10. Kautschukzusammensetzung nach mindestens einem der vorgenannten Ansprüche, wobei die mindestens eine terminierende Verbindung hydrolysierbar ist.

11. Kautschukzusammensetzung nach mindestens einem der vorgenannten Ansprüche, wobei R eine Alkylgruppe mit 1 bis 3 Kohlenstoffatomen ist.

12. Kautschukzusammensetzung nach mindestens einem der vorgenannten Ansprüche, wobei die mindestens eine terminierende Gruppe ist:
Si(OCH₂CH₃)₄·

13. Verfahren zur Herstellung einer Kautschukzusammensetzung in Übereinstimmung mit mindestens einem der vorgenannten Ansprüche, wobei Dampfstrippen zum Isolieren, Reinigen oder Wiedergewinnen des Polymers verwendet wird.

14. Luftreifen mit einem Bauteil, das eine Kautschukzusammensetzung in Übereinstimmung mit mindestens einem der Ansprüche 1 bis 12 umfasst.

## Revendications

1. Composition de caoutchouc comprenant, basées sur 100 parties d'élastomère (phr) :
(A) à concurrence de 60 à 90 phr, un polymère comprenant :
(1) un groupe de terminaison muni d'un composé de terminaison
XₙSi(OR)ₘR'₄₋ₘ₋ₙ
dans lequel X représente un atome de chlore, un atome de brome ou un atome d'iode, R représente un groupe alkyle contenant de 1 à 7 atomes de carbone, R' représente un groupe alkyle contenant de 1 à 20 atomes de carbone, un groupe aryle, un groupe vinyle ou un groupe alkyle halogéné, m représente un entier de 1 à 4, n représente un entier de 0 à 2, et m représente de 1 à 4 ;
(2) des unités de répétition comprenant :
(a) une unité de répétition qui provient d'un monomère de dioléfine conjuguée ; et
(b) une unité de répétition qui provient d'un monomère d'amine ;
(B) à concurrence de 40 à 10 phr, un polybutadiène possédant une microstructure comprenant des unités 1,4-isomère de configuration cis à concurrence 96 à 99 %, des unités 1,4-isomère de configuration trans à concurrence de 0,1 à 1 % et des unités 1,2-isomère de configuration vinyle à concurrence 1 à 3 % ; et
(C) à concurrence de 50 à 150 phr, de la silice.

2. Composition de caoutchouc selon la revendication 1, dans laquelle le polybutadiène possède un indice d'hétérogénéité (Mw/Mn) dans la plage de 3/1 à 5/1 et/ou un poids moléculaire moyen en nombre (Mn) dans la plage de 75.000 à 150.000.

3. Composition de caoutchouc selon la revendication 1, dans laquelle la composition de caoutchouc comprend de la silice à concurrence de 50 à 100 phr et/ou dans laquelle la composition de caoutchouc comprend en outre du noir de carbone à concurrence de 5 à 50 phr.

4. Composition de caoutchouc selon au moins une des revendications précédentes, dans laquelle le monomère d'amine et un monomère d'aminostyrène.

5. Composition de caoutchouc selon la revendication 1 à 4, dans laquelle le monomère d'amine répond à la formule est choisi parmi le groupe constitué par :
(a) 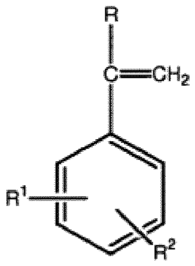 dans laquelle R représente un groupe alkyle contenant de 1 à 10 atomes de carbone ou un atome d'hydrogène ; R¹ et R² peuvent être identiques ou différents et représentent un atome d'hydrogène ou un groupe fonctionnel d'amine ; dans laquelle, de préférence R¹ et R² ne représentent pas tous deux un atome d'hydrogène et dans laquelle de préférence au moins un des radicaux R¹ et R² représente une fraction choisie parmi : 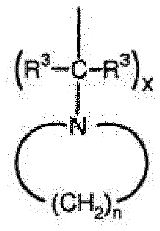 ou 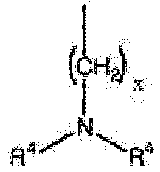 ou 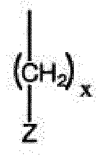 dans lesquelles les radicaux R³ au sein des unités de répétition et dans des unités de répétition différentes peuvent être identiques ou différents et représentent un atome d'hydrogène ou bien des groupes alkyle contenant de 1 à 4 atomes de carbone ; n représente de 1 à 10 ; x représente de 1 à 10 ; les radicaux R⁴ peuvent être identiques ou différents et sont choisis parmi le groupe constitué par des groupes alkyle contenant de 1 à 10 atomes de carbone, des groupe aryle, des groupes allyle et des groupes alcoxy répondant à la formule développée - (CH₂)_{y}-O-(CH₂)_{z}-CH₃, dans laquelle y représente un entier de 1 à 10 et z représente un entier de 1 à 10 ; et Z représente un composé hétérocyclique azoté ;
(b) 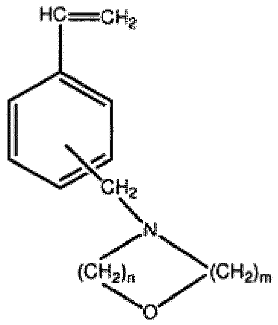 dans laquelle n représente un entier de 1 à 10 et m représente un entier de 1 à 10 ;
(c) 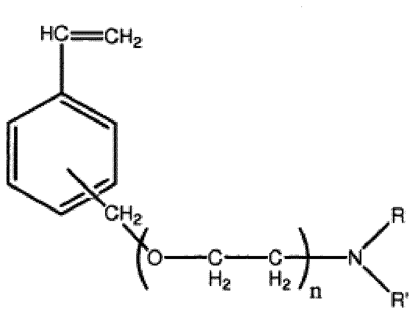 dans laquelle n représente un entier de 1 à 10, et R et R' peuvent être identiques ou différents et représentent des groupes alkyle contenant de 1 à 10 atomes de carbone ;
(d) 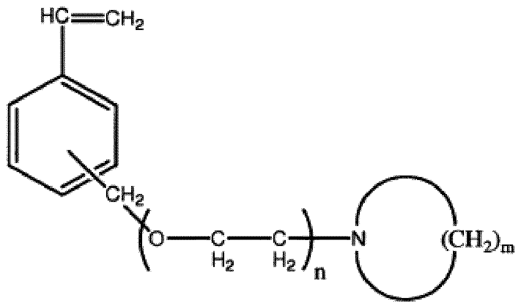 dans laquelle n représente un entier de 1 à 10 et m représente un entier de 4 à 10 ;
(e) 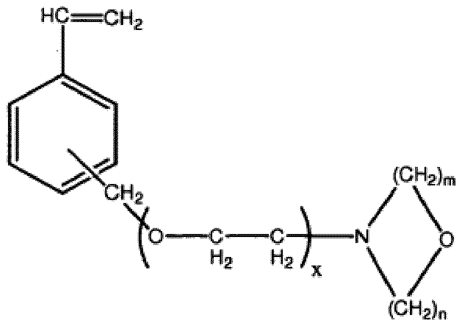 dans laquelle x représente un entier de 1 à 10, n représente un entier de 1 à 10 et m représente un entier de 1 à 10 ;
(f) 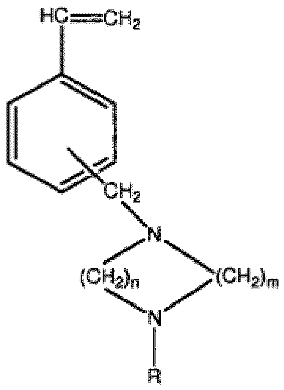 dans laquelle R représente un atome d'hydrogène ou un groupe alkyle contenant de 1 à 10 atomes de carbone ; n représente un entier de 1 à 10 et m représente un entier de 1 à 10 ;
(g) 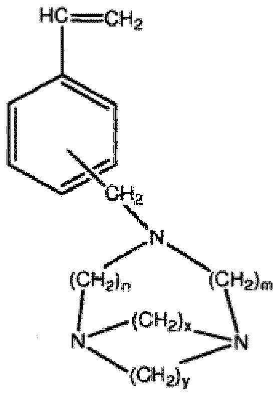 dans laquelle n représente un entier de 1 à 10, m représente un entier de 1 à 10 ; x représente un entier de 1 à 10 et y représente un entier de 1 à 10.

6. Composition de caoutchouc selon au moins une des revendications précédentes, dans laquelle le monomère d'amine représente : 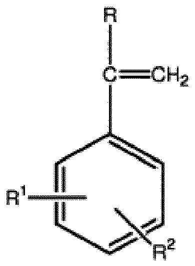 dans laquelle R représente un groupe alkyle contenant de 1 à 10 atomes de carbone ou un atome d'hydrogène ; dans laquelle R¹ et R² ne représentent pas tous deux un atome d'hydrogène et dans laquelle au moins un des radicaux R¹ et R² représente une fraction répondant à la formule : 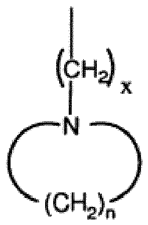 dans laquelle n représente de 1 à 10 et x représente de 1 à 10.

7. Composition de caoutchouc selon au moins un des revendications précédentes, dans laquelle le monomère d'amine représente : 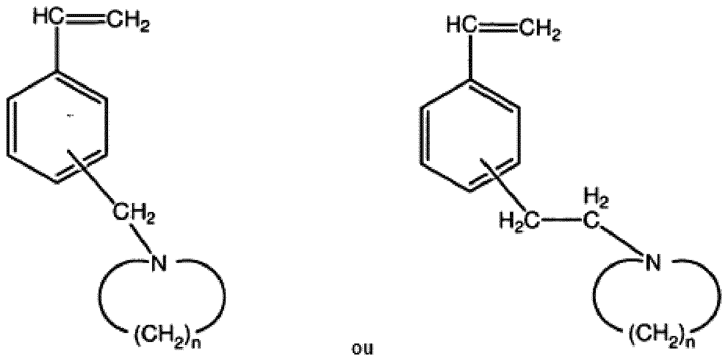 dans laquelle n représente un entier de 4 à 10.

8. Composition de caoutchouc selon la revendication 5, dans laquelle le groupe hétérocyclique azoté (groupe Z) mentionné dans la formule (a) est choisi parmi le groupe constitué par : 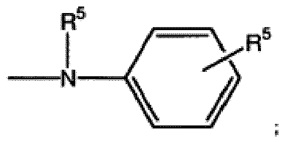 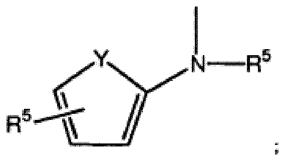 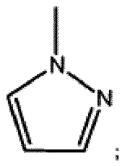 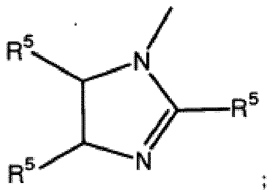 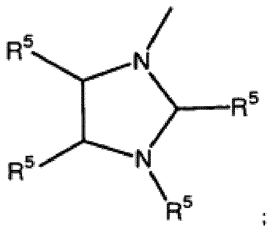 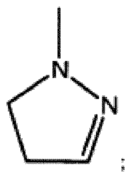 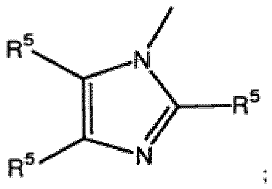 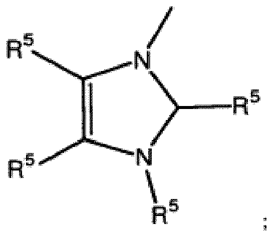 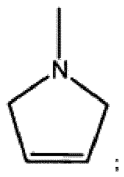 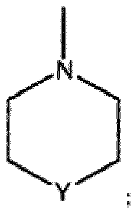 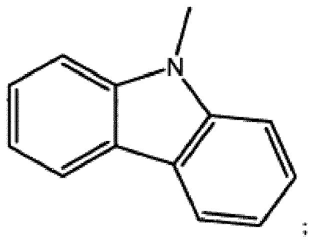 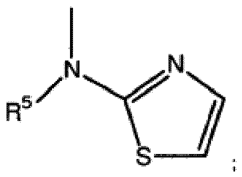 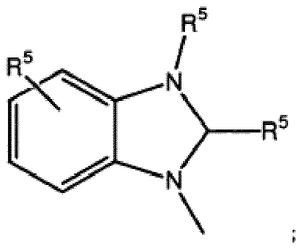 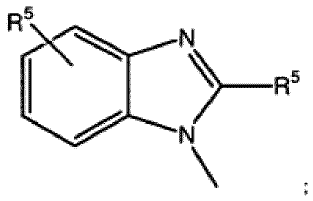 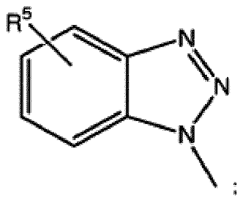 et 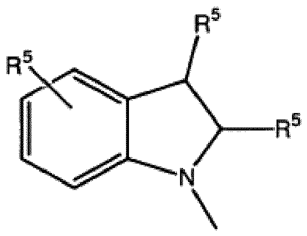 dans lesquelles les groupes R⁵ peuvent être identiques ou différents et sont choisis parmi le groupe constitué par des groupes alkyle contenant de 1 à 10 atomes de carbone, des groupe aryle, des groupes allyle et des groupes alcoxy ; et Y représente un atome d'oxygène, un atome de soufre ou un groupe méthylène.

9. Composition de caoutchouc selon au moins une des revendications précédentes, dans laquelle le monomère d'amine représente :

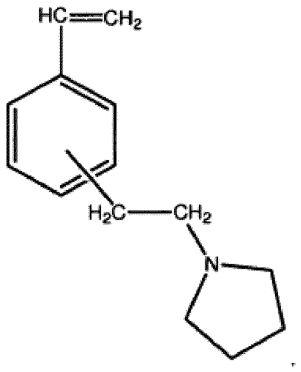

10. Composition de caoutchouc selon au moins une des revendications précédentes, dans laquelle ledit au moins un composé de terminaison est hydrolysable.

11. Composition de caoutchouc selon au moins une des revendications précédentes, dans laquelle R représente un groupe alkyle contenant de 1 à 3 atomes de carbone.

12. Composition de caoutchouc selon au moins une des revendications précédentes, dans laquelle ledit au moins un composé de terminaison représente un groupe :
**Si(OCH₂CH₃)₄.**

13. Procédé de préparation d'une composition de caoutchouc selon au moins une des revendications précédentes, dans lequel on utilise un procédé d'entraînement à la vapeur pour isoler, purifier ou récupérer le polymère.

14. Bandage pneumatique possédant un composant comprenant une composition de caoutchouc selon au moins une des revendications 1 à 12.
